# EUROPEAN PATENT SPECIFICATION

(11) **EP 4 520 983 B1**
(45) Date of publication and mention of the grant of the patent: **22.07.2026**
(21) Application number: 24198440.0
(22) Date of filing: 04.09.2024
(51) Int. Cl.: F16B 21/07, A44B 17/00

(54) **IMPROVED SNAP FASTENER**
VERBESSERTER DRUCKKNOPF
BOUTON-PRESSION AMÉLIORÉ

(30) Priority: 06.09.2023 IT 202300018282
(43) Date of publication of application: 12.03.2025
(73) Proprietor: RIRI SA, 6850 Mendrisio (CH)
(72) Inventor: BREZZI, Simone, 35020 Maserà di Padova (PD) (IT); CASSIANI, Giulia, 30030 Martellago (VE) (IT); FERRARA, Marco, 35028 Piove di Sacco (PD) (IT)
(74) Representative: Provvisionato, Paolo

(56) References cited:
- DE-C- 256 068
- DE-C- 315 088
- GB-A- 565 289
- IT-A1- UB20 152 665

## Description

### Field of the invention

The present invention relates to a snap fastener.

The invention has been developed with particular regard to an improved snap fastener for use in clothing and/or in leather goods.

### Technological background

Snap fasteners are generally known and comprise a female element and a male element which can be connected to each other in a disconnectable manner by means of a resiliently deformable engagement member, typically a ring, which is mounted in the female element, in a receiving seat. At least a portion of the male element can be selectively inserted into the receiving seat in a connection direction in order to move from an unbuttoned configuration, in which the male element and the female element are separated and disconnected, to a buttoned configuration, in which the two male and female elements are connected to each other. A fastener of this type is known from WO 1997/15207.

There are known many various snap fasteners of the type indicated above which are buttoned and unbuttoned by applying a pressure or traction with respect to the two male and female elements in the connection direction, respectively.

One problem of the known fasteners is balancing the resistance to deformation of the ring: if it is excessively flexible, the fastener tends to become accidentally disengaged, an occurrence which is obviously unacceptable, while if it is excessively hard, engaging it becomes very difficult and impractical. An elderly person, a child or more generally a person with fine motor skill problems may find the conventional automatic fasteners particularly inconvenient for this reason.

DE315088C describes a snap button with a wire spring consisting of serpentine coils; when a known pressure pin, which is provided with a tapered neck, is pressed into the spring, the spring opens not only by lateral deflection of its legs, but also by a yielding of the inner leg ends in the axial direction of the button, while when the head is pulled out, the latter spring effect is eliminated by the shape of the housing.

GB565289A describes a snap fastener with a socket formed with an enlarged recess at the rear so that a split spring ring can tilt axially and expand to allow the stud to be disengaged only when a pull is exerted in a specific direction.

### Statement of invention

An object of the invention is to solve the problems of the prior art. In particular, an object is to provide an automatic fastener which is easier to fasten. Another object is to provide a fastener which is more resistant to accidental unbuttoning. Another object is to provide a fastener which is easier to button and at the same time more resistant to accidental unbuttoning. Another object is to provide an automatic fastener which is compact and does not take up much space. Another object is to provide an automatic fastener which is aesthetically pleasing, well refined in the portions which are visible even when it is unbuttoned. Another object is to provide a fastener which does not run the risk of becoming caught in clothing or objects. Furthermore, an object is to provide an automatic fastener which requires only minimal modifications to the production processes with respect to conventional snap fasteners. Another object is to provide a fastener which is economical, simple, reliable during use and secure.

A snap fastener according to claim 1 is provided.

According to a first aspect, there is described a snap fastener comprising a male element and a female element. The male element and the female element may be able to be connected to each other in a connection direction. The female element may comprise a cavity, in which a resilient retention member can be received. The cavity can be tapered, for example, in the form of a truncated cone. The resilient retention member may be suitable for gripping and retaining a connection portion of the male element. The resilient retention member may be movable inside the cavity. In this manner, when the fastener is buttoned, it may be located in a zone of the cavity having a first diameter or, during a fastening step, in another zone of the cavity having a second diameter, which is greater than the first diameter. When the resilient retention member is located in a zone of the cavity having a greater diameter than the diameter at rest of the same resilient retention member, it is free to become wider. The possibility of the resilient retention member becoming wider during the fastening makes the automatic fastener extremely easy to button as a result of the reduced resistance provided by the resilient retention member. Vice versa, when the fastener is buttoned, there not being this possibility of expansion of the resilient retention member, the fastener can be unbuttoned only by compression of the resilient retention member and therefore requires greater force in order to be unbuttoned than buttoned. Furthermore, because the resilient retention member is normally at rest when the fastener is buttoned and becomes deformed only during the fastening and unfastening operations, it is subjected to minimal wear, which is substantially negligible.

According to one aspect, there is described a snap fastener comprising a male element and a female element. The female element may comprise a cavity, in which a resilient retention member can be received. The resilient retention member is suitable for gripping and retaining a connection portion of the male element. The automatic fastener becomes buttoned by applying thereto a force, in a direction parallel with the axes of the components of the fastener, which is less than the force which is applied to unbutton it. In other words, there is described a snap fastener which is characterized by a predefined unbuttoning force, which is defined as the force necessary to unbutton the fastener, and a predefined buttoning force, which is defined as the force necessary to button the fastener, wherein the unbuttoning force is greater than the buttoning force.

According to one aspect, there is described a snap fastener comprising a male element and a female element. The female element may comprise a cavity, in which a resilient retention member which is suitable for gripping and retaining a connection portion of the male element can be received. The resilient retention member may have an internal radius which is defined as the radius of a hole through which the connection portion of the male element is inserted, and an external radius, which is defined as the radius of the resilient retention member overall, wherein, when the fastener is being buttoned, the internal radius and the external radius both increase. When the fastener is being unbuttoned, preferably the external radius of the resilient retention member does not increase.

According to one aspect, there is described a snap fastener comprising a male element and a female element which is provided with a resilient retention member. The resilient retention member may comprise a plurality of portions which are arranged along a circumference and which are connected to each other by a plurality of resilient connection elements. The connection elements preferably have a resilience greater than the portions.

Finally, it may be noted that the fastener described is particularly compact so as to be able also to be used at locations where a very small fastener is required for aesthetic and/or technical reasons. Furthermore, the fastener which is formed in this manner has no visible sheet metal edge, which could be inconvenient, possibly even sharp or in any case aesthetically unpleasant.

Another interesting advantage is that the fastener according to the invention may appear to be generally identical with regard to the visible components to a conventional automatic fastener.

### Brief description of the drawings

Additional features and advantages will be appreciated from the following detailed description of a preferred embodiment of the invention, with reference to the appended drawings which are provided merely by way of non-limiting example and in which:

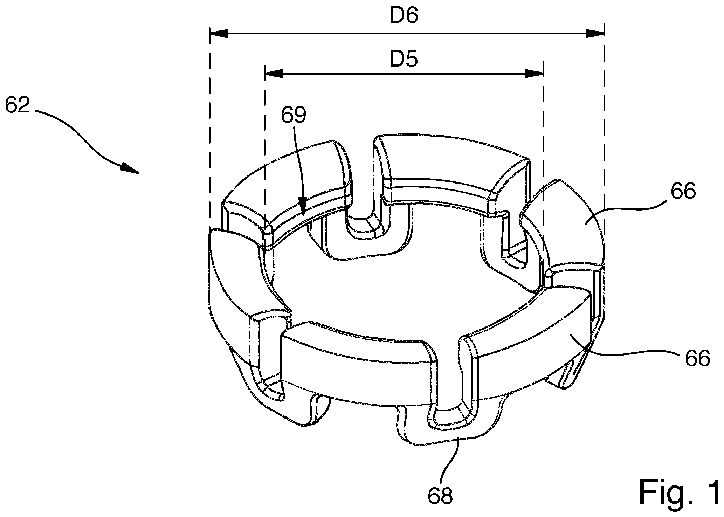

- Figure 1 is a perspective view of a resilient retention member for a fastener according to the invention,
- Figure 2 shows in cross-section an unbuttoned snap fastener having therein the resilient retention member of Figure 1,
- Figure 3 shows in cross-section the same fastener of Figure 2, during the buttoning step,
- Figure 4 shows in cross-section the same fastener of Figure 2, in the buttoned state,

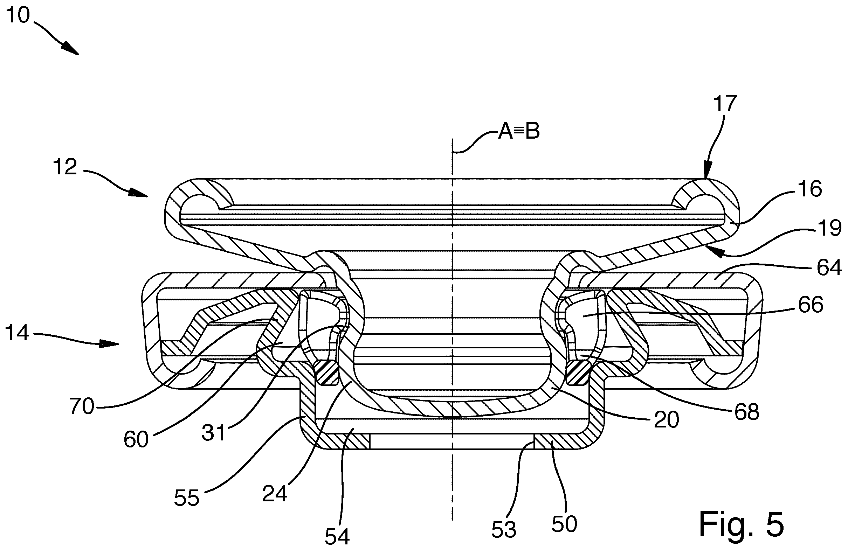

- Figure 5 shows a different cross-section of the same fastener of Figure 2, in the buttoned state,
- Figure 6 shows a variant of the resilient retention member.

### Detailed description

Now with reference to the Figures, a snap fastener 10 comprises a male element 12 and a female element 14. During use, the two elements are fixed to two respective substrates, such as, for example, edges of fabric, hides, plastics material or the like, in order to be able to button them to each other. The fixing of the male and female elements to the respective substrates can be carried out according to known methods which are therefore not described in detail, for example, by means of riveting, nailing, stitching and other techniques which are generally known in the field.

The male element 12 which is depicted is preferably made from brass or another metal. It comprises a base 16 which is, for example, generally disk-shaped, with a side 17 which is intended to be placed on the substrate during use.

A connection portion 20 projects from the base 16 of the male element 12, from a face 19 of the base 16 opposite the face 17 which is intended to be placed on the substrate during use. The connection portion 20 is intended to connect the male element 12 to the female element 14. The connection portion 20 comprises a substantially tubular member 22 which is generally narrower than the disk-shaped base 16 and which projects with respect to the disk-shaped base 16 from the face 19. At the end of the tubular member opposite the disk-shaped base 16, the tubular member 22 has a head 24 with a diameter D1. The tubular member 22 is provided with a restriction 31 at the lateral wall 26 thereof.

In greater detail, in the region of the restriction 31, the tubular member 22 narrows to a diameter D2, which is less than the diameter D1 of the head 24.

The female element 14 comprises a base 50 with a lower face 52, for example intended to be placed on the substrate during use and from which there extends a tubular member 55 which forms a cavity or receiving seat 54 for the connection portion 20 of the male element 12 and a receiving seat 60 for a resilient retention member. The receiving seat 60 has a tapered formation, that is to say, has a variable diameter between a diameter D3 in a zone facing towards the male element and a diameter D4 in the opposite direction. In the preferred exemplary embodiment depicted, the lateral wall 70 which defines the receiving seat 60 has a frustoconical shape, but a different tapered formation is not excluded, for example, convex, with D3 being less than D4.

The base 50 is preferably provided with a central hole 53 in order to fix the element to a substate, for example, for the passage of a fixing member, which is not illustrated, such as a rivet or the like.

A resilient retention member 62 is received in the receiving seat 60 of the female element 14. The receiving seat 60 is closed by an annular retention edge 64 which prevents the resilient retention member 62 from leaving the receiving seat 60. The annular retention edge 64 is preferably constructed by means of a shaped metal sheet.

The resilient retention member 62 comprises a plurality of portions 66 which are connected to each other by a plurality of resilient connection elements 68. In the embodiment illustrated, the connection elements 68 extend transversely with respect to the plane in which the portions 66 are located, and are preferably U-shaped. As result of the material or preferably as a result of the formation and dimensions thereof, the connection elements are more flexible with respect to the portions 66. The portions 66 are arranged along a circumference and together define a hole 69, with an internal diameter D5 at rest, through which the connection portion 20 of the male element is inserted. The portions 66 together define an external radius D6, that is to say, the radius of the resilient retention member overall.

When the resilient retention member 62 is subjected to a radial force, the connection elements 68, which are more flexible than the portions 66, allow the portions 66 to move away from each other, thereby increasing the internal diameter and the external diameter of the resilient retention member 62. Preferably, the external diameter D6 is approximately identical to the minimum diameter D3 of the seat 60 for the resilient retention member 62 although it is possible to provide some play.

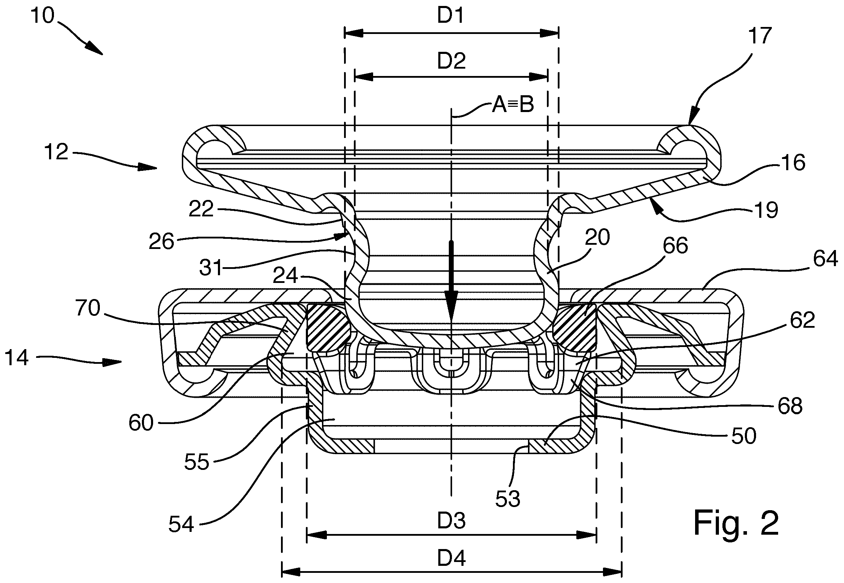

During use, the male element 12 and the female element 14 of the snap fastener 10 are fixed to two substrates, respectively, which it is desirable to fasten. As known, in order to button the snap fastener 10, the male element 12 is positioned with a longitudinal axis A thereof substantially coincident with the axis B of the female element 14. The head 24 of the male element 12 is placed on the opening of the receiving seat 54 of the female element 14. The two elements, male element 12 and female element 14, are pressed against each other in a connection direction, which is substantially parallel with the longitudinal axis B of the female element, as can be seen in Figure 2.

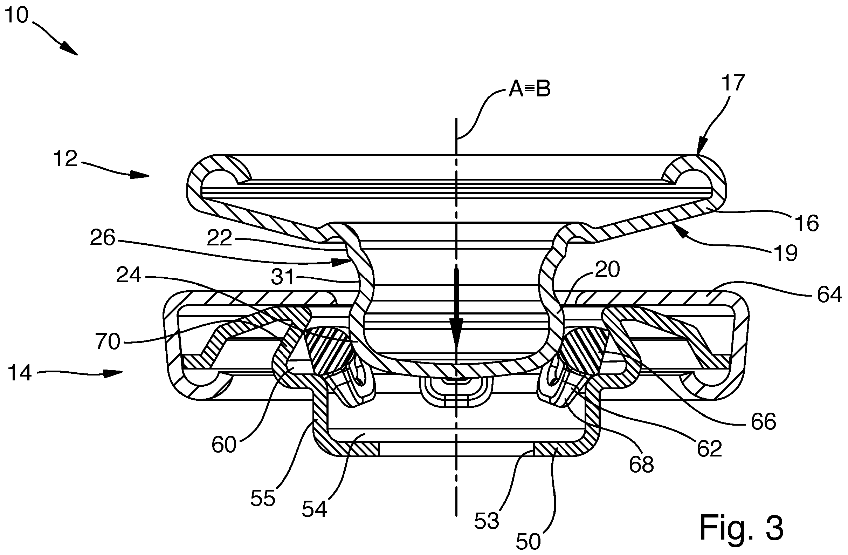

Now with reference to Figure 3, the pressure of the male element against the female element brings about a movement of the resilient retention member towards the interior of the female component. As a result of the tapered lateral wall 70 which defines the receiving seat 60, the retention member thus moves into a zone, in which the receiving seat has an intermediate diameter between D3 and D4, greater than D3, and therefore the portions 66 can move apart from each other, thereby increasing the internal diameter D5 and the external diameter D6 of the resilient retention member. The connection portion 20 of the male element 20 is therefore easily inserted into the deformed retention member. When the resilient retention member 62 passes the head 24, it narrows resiliently around the restriction 31 of the connection portion 20, returning to its initial position and formation, in which the resilient retention member 62 is in contact with the annular retention edge 64 of the female element.

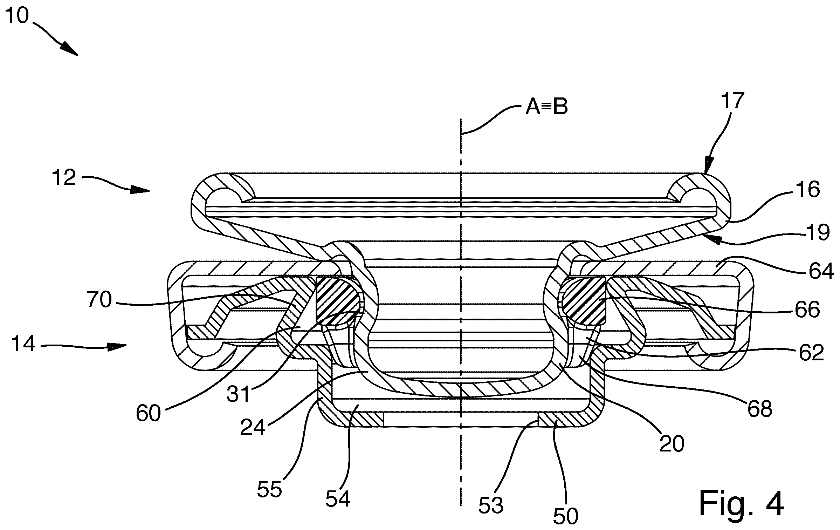

In this buttoned configuration, which is shown in Figure 4, the resilient retention member 62 retains the connection portion 20 in the receiving seat 54 of the female element, preventing the release. The male element 12 and female element 14 in the buttoned configuration are preferably positioned one against the other, with the face 19 of the base 16 of the male element 12 in contact with the annular retention edge 64 of the female element.

It may be noted that, in this configuration, the resilient retention member 62 is in the region of the smaller diameter D3 of the seat thereof and, therefore, it cannot become wider or, at most, it can widen only slightly, significantly less than how much it can widen in the configuration of Figure 3.

If it is desirable to unbutton the fastener, thus deliberately disconnecting and separating the two male 12 and female 14 elements, there is applied a traction which is directed towards moving the two male 12 and female 14 elements apart from each other, as for conventional snap fasteners. The movement is normally in an axial direction and/or of the combined axial and rotational type. The traction which is applied brings about a localized compression of the portions 66 of the retention member which thereby allow the connection portion 20 to be released and therefore the fastener to be unbuttoned. During this unbuttoning operation, the external diameter of the resilient retention member does not increase: the resilient retention member in fact remains, during the unbuttoning, in the zone of the receiving seat having a smaller diameter D3. The resistance which the resilient retention member opposes to the unbuttoning is therefore relatively high. By comparison, during the buttoning operation described above, on the other hand, the resilient retention member is pushed into a zone of the receiving seat having a greater diameter D4 and therefore the internal diameter and the external diameter of the resilient retention member both increase in order to allow easier insertion of the connection portion. The resistance which the resilient retention member opposes to the buttoning is therefore relatively high.

It may be noted that, because as set out above the connection elements 68 are more readily deformable than the portions 66, the force necessary to compress the portions 66 during the unbuttoning is significantly greater than the force necessary to move the portions 66 apart from each other during the buttoning.

In more general terms, the fastener 10 is therefore characterized by a predefined unbuttoning force, which is defined as the force necessary to unbutton the fastener, and a predefined buttoning force, which is defined as the force necessary to button the fastener, and the unbuttoning force is greater than the buttoning force.

The resilient retention member 62 is further preferably formed so that the connection elements 68 press against the tubular member 55. The connection elements 68 therefore contribute to maintaining the resilient retention member in the portion of the seat 60 with a smaller diameter D3. In this manner, optimum retention of the fastener is further ensured. However, it will be understood that there may be provided different methods of maintaining the resilient retention member in the portion of the seat 60 with a smaller diameter D3, not least the simple interaction between the resilient retention member and the connection portion 20 of the male element.

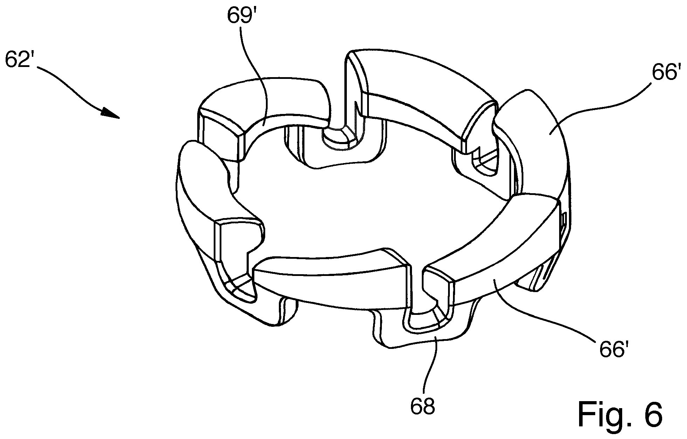

Naturally, the principle of the invention remaining the same, the forms of embodiment and details of construction may be varied widely with respect to those described and illustrated above without thereby departing from the scope of the invention. By way of example of variants which are in any case protected by the present invention, Figure 6 shows a variant of a resilient retention member 62' which is generally similar to the resilient retention member 62 described above, wherein each portion 66' has a variable thickness, defining an inclined plane. The force necessary to deform the resilient retention member sufficiently to allow the buttoning is further divided as a result of the presence of inclined planes. The buttoning is thereby further facilitated.

Another resilient retention member which is not illustrated may provide for portions which have a first rigidity and which are connected to each other in the same plane by connection elements having a second rigidity which is smaller than the first rigidity, as a result of a reduced thickness. Other embodiments may more generally comprise resilient retention members which are formed differently and which may widen to a greater diameter with respect to the minimum diameter D3 of the seat thereof, and which, in the rest configuration thereof, are sufficiently compressible to allow the unbuttoning of the fastener.

## Claims

1. A snap fastener comprising a male element (12) and a female element (14) which can be connected to each other in a connection direction,
- wherein the male element (12) comprises a connection portion (20), on which a restriction (31) is formed,
- wherein the female element (14) comprises a tapered cavity (60), in which a resilient retention member (62, 62'), suitable for gripping and retaining the connection portion (20) of the male element (12), is received,
- wherein the resilient retention member (62, 62') has an internal diameter (D5), which is defined as the diameter of a hole through which the connection portion (20) of the male element is inserted, and an external diameter (D6), which is defined as the diameter of the resilient retention member overall, wherein during a buttoning operation the internal diameter and the external diameter both increase in order to ease the insertion of the connection portion and, during an unbuttoning operation, the external diameter (D6) of the resilient retention member does not increase.

2. A snap fastener according to claim 1, wherein the cavity is in the form of a truncated cone.

3. A snap fastener according to claim 1 or 2, wherein the resilient retention member is made from a synthetic material.

4. A snap fastener according to any one of the preceding claims, having a predefined unbuttoning force, which is defined as the force necessary to unbutton the fastener, and a predefined buttoning force, which is defined as the force necessary to button the fastener, wherein the unbuttoning force is greater than the buttoning force.

5. A snap fastener according to any one of the preceding claims, wherein the resilient retention member comprises a plurality of portions (66, 66') which are arranged along a circumference and which define a plane, which are connected to each other by a plurality of resilient connection elements (68).

6. A snap fastener according to the preceding claim, wherein, when the fastener is being buttoned, the portions of the resilient retention member are free to move apart from each other.

7. A snap fastener according to claim 5 or 6, wherein, when the fastener is being unbuttoned, the cavity (54) prevents the portions of the resilient retention member from moving apart from each other.

8. A snap fastener according to claim 5, 6 or 7, wherein the connection elements extend transversely with respect to the plane.

9. A snap fastener according to any one of the preceding claims, wherein the resilient retention member is movable inside the cavity between a first zone of the cavity having a first diameter and a second zone of the cavity having a second diameter, which is greater than the first diameter of the first zone.

10. A snap fastener according to the preceding claim, wherein, when the fastener is buttoned, the resilient retention member is located in the first zone of the cavity and, during a buttoning step, the resilient retention member is pushed into said second zone of the cavity.

11. A snap fastener according to claim 9 or 10, wherein the resilient retention member has an external diameter at rest smaller than the second diameter of the second zone of the cavity.

## Patentansprüche

1. Druckknopf, umfassend ein Steckelement (12) und ein Aufnahmeelement (14), die in einer Verbindungsrichtung miteinander verbunden werden können,
- wobei das Steckelement (12) einen Verbindungsabschnitt (20) umfasst, an dem eine Verengung (31) ausgebildet ist,
- wobei das Aufnahmeelement (14) einen sich verjüngten Hohlraum (60) umfasst, in dem ein elastisches Halteelement (62, 62') aufgenommen ist, das geeignet ist, den Verbindungsabschnitt (20) des Steckelements (12) zu greifen und zu halten,
- wobei das elastische Halteelement (62, 62') einen Innendurchmesser (D5) aufweist, der als der Durchmesser eines Lochs definiert ist, durch das der Verbindungsabschnitt (20) des Steckelements eingeführt wird, und einen Außendurchmesser (D6) aufweist, der als der Durchmesser des elastischen Halteelements insgesamt definiert ist, wobei während eines Schließvorgangs der Innendurchmesser und der Außendurchmesser beide zunehmen, um das Einführen des Verbindungsabschnitts zu erleichtern, und während eines Öffnungsvorgangs der Außendurchmesser (D6) des elastischen Halteelements nicht zunimmt.

2. Druckknopf nach Anspruch 1, wobei der Hohlraum die Form eines Kegelstumpfs aufweist.

3. Druckknopf nach Anspruch 1 oder 2, wobei das elastische Halteelement aus einem synthetischen Material hergestellt ist.

4. Druckknopf nach einem der vorhergehenden Ansprüche, aufweisend eine vorgegebene Öffnungskraft, die als die Kraft definiert ist, die notwendig ist, um den Verschluss zu öffnen, und eine vorgegebene Schließkraft, die als die Kraft definiert ist, die notwendig ist, um den Verschluss zu schließen, wobei die Öffnungskraft größer ist als die Schließkraft.

5. Druckknopf nach einem der vorhergehenden Ansprüche, wobei das elastische Halteelement eine Mehrzahl von Abschnitten (66, 66') umfasst, die entlang eines Umfangs angeordnet sind und eine Ebene definieren, die durch eine Mehrzahl elastischer Verbindungselemente (68) miteinander verbunden sind.

6. Druckknopf nach dem vorhergehenden Anspruch, wobei, wenn der Verschluss geschlossen wird, die Abschnitte des elastischen Halteelements sich frei voneinander wegbewegen können.

7. Druckknopf nach Anspruch 5 oder 6, wobei, wenn der Verschluss geöffnet wird, der Hohlraum (54) verhindert, dass sich die Abschnitte des elastischen Halteelements voneinander wegbewegen.

8. Druckknopf nach Anspruch 5, 6 oder 7, wobei sich die Verbindungselemente quer in Bezug auf die Ebene erstrecken.

9. Druckknopf nach einem der vorhergehenden Ansprüche, wobei das elastische Halteelement innerhalb des Hohlraums zwischen einer ersten Zone des Hohlraums mit einem ersten Durchmesser und einer zweiten Zone des Hohlraums mit einem zweiten Durchmesser bewegbar ist, der größer ist als der erste Durchmesser der ersten Zone.

10. Druckknopf nach dem vorhergehenden Anspruch, wobei, wenn der Verschluss geschlossen ist, das elastische Halteelement in der ersten Zone des Hohlraums angeordnet ist und während eines Schließschritts das elastische Halteelement in die genannte zweite Zone des Hohlraums gedrückt wird.

11. Druckknopf nach Anspruch 9 oder 10, wobei das elastische Halteelement im Ruhezustand einen Außendurchmesser aufweist, der kleiner ist als der zweite Durchmesser der zweiten Zone des Hohlraums.

## Revendications

1. Bouton-pression comprenant un élément mâle (12) et un élément femelle (14) qui peuvent être raccordés l'un à l'autre dans une direction de raccordement,
- dans lequel l'élément mâle (12) comprend une partie de raccordement (20), sur laquelle une restriction (31) est formée,
- dans lequel l'élément femelle (14) comprend une cavité progressivement rétrécie (60), dans laquelle est reçu un organe de retenue résilient (62, 62'), apte à saisir et à retenir la partie de raccordement (20) de l'élément mâle (12),
- dans lequel l'organe de retenue résilient (62, 62') présente un diamètre interne (D5), qui est défini comme le diamètre d'un trou à travers lequel la partie de raccordement (20) de l'élément mâle est insérée, et un diamètre externe (D6), qui est défini comme le diamètre de l'organe de retenue résilient dans son ensemble, dans lequel pendant une opération de boutonnage, le diamètre interne et le diamètre externe augmentent tous deux afin de faciliter l'insertion de la partie de raccordement et, pendant une opération de déboutonnage, le diamètre externe (D6) de l'organe de retenue résilient n'augmente pas.

2. Bouton-pression selon la revendication 1, dans lequel la cavité se présente sous la forme d'un cône tronqué.

3. Bouton-pression selon la revendication 1 ou 2, dans lequel l'organe de retenue résilient est réalisé avec un matériau synthétique.

4. Bouton-pression selon l'une quelconque des revendications précédentes, présentant une force de déboutonnage prédéfinie, qui est définie comme la force nécessaire pour déboutonner le bouton-pression, et une force de boutonnage prédéfinie, qui est définie comme la force nécessaire pour boutonner le bouton-pression, dans lequel la force de déboutonnage est supérieure à la force de boutonnage.

5. Bouton-pression selon l'une quelconque des revendications précédentes, dans lequel l'organe de retenue résilient comprend une pluralité de parties (66, 66') qui sont disposées le long d'une circonférence et qui définissent un plan, lesquelles sont reliées les unes aux autres par une pluralité d'éléments de raccordement résilients (68)

6. Bouton-pression selon la revendication précédente, dans lequel, lorsque le bouton-pression est en cours de boutonnage, les parties de l'organe de retenue résilient sont libres de s'écarter les unes des autres.

7. Bouton-pression selon la revendication 5 ou 6, dans lequel, lorsque le bouton-pression est en cours de déboutonnage, la cavité (54) empêche les parties de l'organe de retenue résilient de s'écarter les unes des autres.

8. Bouton-pression selon la revendication 5, 6 ou 7, dans lequel les éléments de raccordement s'étendent transversalement par rapport au plan.

9. Bouton-pression selon l'une quelconque des revendications précédentes, dans lequel l'organe de retenue résilient est mobile à l'intérieur de la cavité entre une première zone de la cavité ayant un premier diamètre et une deuxième zone de la cavité ayant un deuxième diamètre, qui est supérieur au premier diamètre de la première zone.

10. Bouton-pression selon la revendication précédente, dans lequel, lorsque le bouton-pression est boutonné, l'organe de retenue résilient est situé dans la première zone de la cavité et, pendant une étape de boutonnage, l'organe de retenue résilient est poussé dans ladite deuxième zone de la cavité.

11. Bouton-pression selon la revendication 9 ou 10, dans lequel l'organe de retenue résilient a un diamètre externe au repos inférieur au deuxième diamètre de la deuxième zone de la cavité.
